# EUROPÄISCHE PATENTANMELDUNG

(11) **EP 1 541 914 A1**
(43) Veröffentlichungstag der Anmeldung: **15.06.2005**
(21) Anmeldenummer: 04028633.8
(22) Anmeldetag: 03.12.2004
(51) Int. Cl.: F16K 31/60

(54) **Ventil mit einem Betätigungsgriff**

(30) Priorität: 12.12.2003 DE 10358771
(71) Anmelder: Grohe Water Technology AG & Co. KG, 58675 Hemer (DE)
(72) Erfinder: Luig, Frank-Thomas, 58708 Menden (DE); Schlüter, Matthias, 44289 Dortmund (DE)

(57) **Zusammenfassung**

Bei einem Ventil mit einem Betätigungsgriff (2), der mit einem topfartigen Griffkörper (20) an einer Ventilspindel (10) mit wenigstens einer eine axiale Sicherung bewirkende Schraube (3) befestigt ist, wobei der Griffkörper (20) eine Stirnseite aufweist, die mit Abstand (11) zum Ventilgehäuse (1) angeordnet ist, ist vorgeschlagen, dass am Griffkörper (20) ein verstellbarer Axialanschlag (21) vorgesehen ist, der mittelbar oder unmittelbar an einer Stirnseite der Ventilspindel (10) anliegt, so dass der Abstand (11) einstellbar ist.

## Beschreibung

Die Erfindung betrifft ein Ventil mit einem Betätigungsgriff, der mit einem topfartigen Körper an einer Ventilspindel mit wenigstens einer eine axiale Sicherung bewirkende Schraube befestigt ist, wobei der Griffkörper eine Stirnseite aufweist, die mit Abstand zum Ventilgehäuse angeordnet ist.

Bei derartigen bekannten Ventilen kann es, bedingt durch Fertigungstoleranzen der Ventilspindel, des Ventilgehäuses, des Spindelgehäuses, zu einem unterschiedlichen Abstand des Betätigungsgriffs zum Ventilgehäuse kommen, was insbesondere bei sanitären Wasserarmaturen unerwünscht ist, da z.B. beim Einsatz mehrerer Betätigungsgriffe an einer Mischbatterie unterschiedliche Abstände der Betätigungsgriffe zur Mischbatterie sich optisch besonders ungünstig auswirken würden.

Der Erfindung liegt daher die Aufgabe zugrunde, das eingangs aufgeführte Ventil so auszubilden, dass ein bestimmter Abstand zwischen dem Betätigungsgriff und dem Ventilgehäuse herstellbar ist.

Diese Aufgabe wird erfindungsgemäß bei dem im Oberbegriff des Anspruchs 1 angegebenen Ventil dadurch gelöst, dass am Griffkörper ein verstellbarer Axialanschlag vorgesehen ist, der mittelbar oder unmittelbar an einer Stirnseite der Ventilspindel anliegt, so dass der Abstand einstellbar ist.

Weitere Ausgestaltungen der Erfindung sind in den Ansprüchen 2 bis 11 angegeben.

Die mit der Erfindung erzielbaren Vorteile bestehen insbesondere darin, dass mit dem verstellbaren Axialanschlag individuell ein bestimmter Abstand zwischen dem Betätigungsgriff und dem Ventilgehäuse einstellbar ist, so dass die unvermeidbaren Fertigungstoleranzen einer Ventilspindel, eines Ventilgehäuses, eines Ventilspindelgehäuses und eines Betätigungsgriffs keine abträgliche Wirkung mehr entfalten können.
In weiterer Ausgestaltung der Erfindung kann der Axialanschlag vorteilhaft als Hohlschraube ausgebildet werden, die entweder im Griffkörper oder in einem mit der Ventilspindel verbundenen Körper in einem Bewegungsgewinde angeordnet ist, so dass durch eine Drehbewegung der Hohlschraube der Abstand zwischen dem Ventilgehäuse und dem Betätigungsgriff justierbar ist.

Vorteilhaft wird hierbei die Schraube zur Axialsicherung des Betätigungsgriffs durch eine Öffnung in der Hohlschraube in die Ventilspindel eingedreht.
Damit eine Einstellung des Abstands zwischen dem Betätigungsgriff und dem Ventilgehäuse auch bei aufgestecktem Betätigungsgriff justiert werden kann, wird zweckmäßig die Bohrung im Griffkörper zur Aufnahme der Schraube für die Axialsicherung des Betätigungsgriffs im Durchmesser so groß ausgelegt, dass von außen ein Werkzeug, z.B. Innensechskantschlüssel, Vielzahnschlüssel, Sternschlüssel oder Schraubendreher, in ein Polygonprofil der Hohlschraube einsteckbar ist. Hierdurch kann vor dem Eindrehen der Schraube mit Hilfe einer Fühlerlehre etc. werksseitig oder auch vom Installateur der Abstand zwischen dem aufgesteckten Betätigungsgriff und dem Ventilgehäuse in einfacher Weise durch ein Drehen des als Hohlschraube ausgebildeten Axialanschlages eingestellt werden.

Ein Ausführungsbeispiel der Erfindung ist in der Zeichnung dargestellt und wird im Folgenden näher beschrieben. Es zeigt in der Zeichnung
- Figur 1: einen Teil eines Ventilgehäuses mit einer Ventilspindel und einem daran befestigten Betätigungsgriff teilweise geschnitten;
- Figur 2: den in Figur 1 gezeigten Axialanschlag in der Schnittebene II der Figur 3;
- Figur 3: den in Figur 2 gezeigten Axialanschlag um 90° gedreht in Ansicht von vorn.

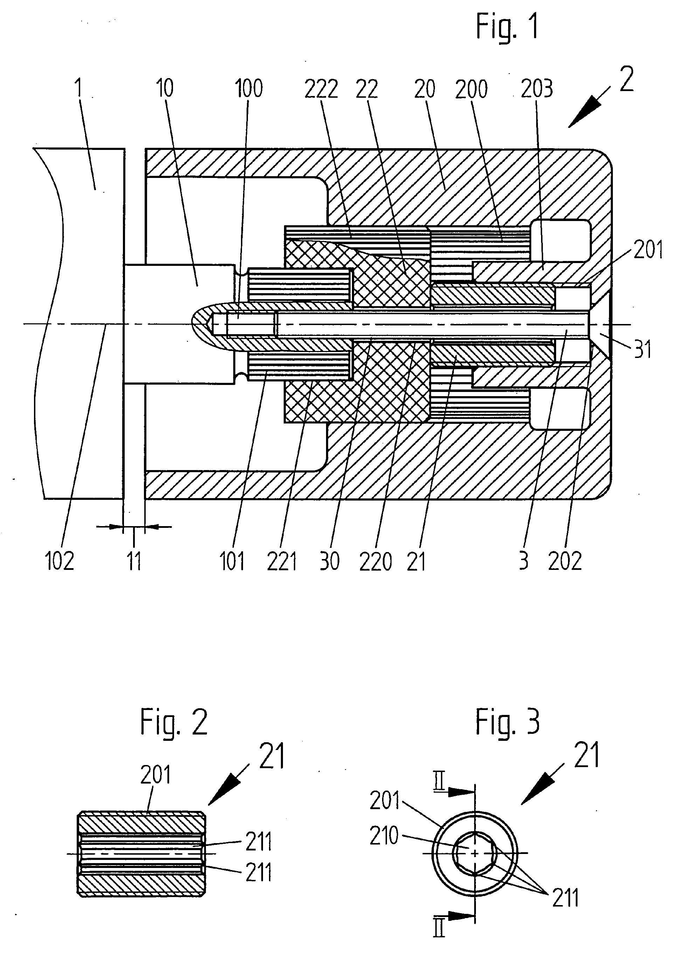

In einem in der Zeichnung zum Teil gezeigten Ventilgehäuse 1 ist eine drehbare Ventilspindel 10 axial vorstehend angeordnet, die mit einem Endbereich aus dem Ventilgehäuse 1 vorsteht. An dem vorstehenden Endbereich ist am Außenmantel der Ventilspindel 10 eine Riefenverzahnung 101 ausgebildet. Konzentrisch zur Mittelachse 102 ist in der Ventilspindel 10 von der vorstehenden Stirnseite aus eine Gewindebohrung 100 eingebracht.
Auf der Riefenverzahnung 101 der Ventilspindel 10 ist ein Betätigungsgriff 2 drehfest angeordnet. Der Betätigungsgriff 2 enthält dabei einen topfartigen Griffkörper 20, einen Axialanschlag 21 und einen Körper 22 sowie eine Schraube 3, die in die Gewindebohrung 100 eindrehbar ist. Hierbei ist der Körper 22 mit einer in einer Sackbohrung angeordneten Innenriefenverzahnung 221 drehfest auf der Riefenverzahnung 101 der Ventilspindel 10 angeordnet. Konzentrisch zur Innenriefenverzahnung 221 ist eine Öffnung 220 für die Hindurchführung der Schraube 3 ausgebildet. Am Außenmantel des Körpers 22 ist eine Außenriefenverzahnung 222 ausgebildet, die mit einer Innenriefenverzahnung 200 des Griffkörpers 20 in Eingriff steht, derart, dass der Griffkörper 20 bei drehfester Verbindung axial begrenzt verschiebbar angeordnet ist.
Koaxial zur Mittelachse 102 ist in dem Griffkörper 20 in einem rohrförmigen Ansatz 203 ein Bewegungsgewinde 201 für die Aufnahme des Axialanschlags 21 ausgebildet. Der Axialanschlag 21 ist dabei als Hohlschraube ausgebildet und weist auf dem Außenmantel ein dem Bewegungsgewinde 201 entsprechendes Gewinde auf. Außerdem weist der Axialanschlag 21 eine konzentrisch zur Mittelachse 102 ausgebildete Öffnung 210 auf, in der in der Seitenwandung ein Polygonprofil 211 eingebracht ist für den Ansatz eines Drehwerkzeugs, wie es insbesondere aus Figur 3 der Zeichnung zu entnehmen ist. Zur axialen Fixierung des Betätigungsgriffs 2 auf der Ventilspindel 10 ist die Schraube 3 mit einem Senkkopf 31 versehen und in einer Bohrung 202 in der Stirnseite des Betätigungsgriffs 2 eingesetzt, wobei sie mit ihrem ein Gewinde 30 tragenden Schaft die Öffnung 210 des Axialanschlags 21 und die Öffnung 220 des Körpers 22 durchgreift und in die Gewindebohrung 100 der Ventilspindel 10 eingedreht ist. Der Griffkörper 20 ist dabei mit seiner Stirnseite mit einem bestimmten Abstand 11 zum Ventilgehäuse 1 angeordnet.

Die Einstellung eines Abstands 11 der Stirnseite des Betätigungsgriffs 2 zum Ventilgehäuse 1 kann in folgender Weise erfolgen:

Zunächst wird die Schraube 3 aus der Gewindebohrung 100 herausgedreht und aus dem Betätigungsgriff 2 herausgezogen. Die jetzt freiliegende Bohrung 202 des Griffkörpers 20 hat einen lichten Durchmesser der gleich groß ist oder größer ist als der Durchmesser des Polygonprofils 211 des Axialanschlags 21. Durch die Bohrung 202 kann somit ein Drehwerkzeug in das Polygonprofil 211 eingebracht werden und der als Hohlschraube ausgebildete Axialanschlag 21 durch das Einbringen einer Drehbewegung mit Hilfe des Bewegungsgewindes 201 axial verstellt werden. Mit Hilfe einer Fühlerlehre kann somit in einfacher Weise exakt der erforderliche Abstand 11 eingestellt werden, wobei der Betätigungsgriff 2 bei der Drehbewegung des Axialanschlags 21 in Richtung auf das Ventilgehäuse 1 von Hand gedrückt wird. Nach der Einstellung und dem Entfernen des Drehwerkzeugs kann danach die Schraube 3 in die Bohrung 202 wieder eingeführt und in die Gewindebohrung 100 eingedreht werden, wobei dann der Betätigungsgriff 2 mit dem vorgegebenen Abstand 11 zum Ventilgehäuse 1 an der Ventilspindel 10 befestigt ist.
Selbstverständlich kann bei der Werksmontage auch bereits vor dem Einbringen der Schraube 3 der Abstand 11 zwischen Ventilgehäuse 1 und Betätigungsgriff 2 justiert werden, so dass dann abschließend lediglich die Schraube 3 einzudrehen ist.

In dem vorstehend dargelegten Ausführungsbeispiel ist ein Körper 22 aus wärmeisolierendem Kunststoff vorgesehen, damit insbesondere eine Wärmeübertragung von der Ventilspindel 10 auf den Griffkörper 20 weitgehend ausgeschlossen ist. Selbstverständlich kann aber auch der Körper 22 entfallen und der Griffkörper 20 mit einer angepassten Innenriefenverzahnung unmittelbar auf der Riefenverzahnung 101 der Ventilspindel 10 aufgebracht werden.
Auch ist denkbar, dass das Bewegungsgewinde 201 für den Axialanschlag 21 nicht im Griffkörper 20 sondern im Körper 22 ausgebildet ist. Hierbei gelangt dann der Griffkörper 20 mit einer inneren Stirnseite an der vorstehenden Stirnseite des Axialanschlags zu Anlage. Dabei kann auch in dem aus Kunststoff hergestellten Körper 22 eine aus Metall hergestellte Gewindemutter eingespritzt werden, in die der Axialanschlag 21 dann einschraubbar ist.

## Patentansprüche

1. Ventil mit einem Betätigungsgriff (2), der mit einem topfartigen Griffkörper (20) an einer Ventil spindel (10) mit wenigstens einer eine axiale Sicherung bewirkende Schraube (3) befestigt ist, wobei der Griffkörper (20) eine Stirnseite aufweist, die mit Abstand (11) zum Ventilgehäuse (1) angeordnet ist, **dadurch gekennzeichnet, dass** am Griffkörper (20) ein verstellbarer Axialanschlag (21) vorgesehen ist, der mittelbar oder unmittelbar an einer Stirnseite der Ventilspindel (10) anliegt, so dass ein Abstand (11) einstellbar ist.

2. Ventil nach Anspruch 1, **dadurch gekennzeichnet, dass** der Axialanschlag (21) als Hohlschraube ausgebildet ist, die im Griffkörper (20) in einem Bewegungsgewinde (201) angeordnet ist und mit einer Stirnseite an der Ventilspindel (10) oder an einem mit der Ventilspindel (10) verbundenen Körper (22) anliegt.

3. Ventil nach Anspruch 1, **dadurch gekennzeichnet, dass** der Axialanschlag als Hohlschraube ausgebildet ist, die in einem Bewegungsgewinde in einem mit der Ventilspindel verbundenen Körper angeordnet ist und mit ihrer vorstehenden Stirnseite am Griffkörper anliegt.

4. Ventil nach wenigstens einem der vorhergehenden Ansprüche, **dadurch gekennzeichnet, dass** die Schraube (3) durch eine Öffnung (210) des Axialanschlags (21) hindurchgreift und mit Gewinde (30) in einer Gewindebohrung (100) der Ventilspindel (10) gedreht ist.

5. Ventil nach Anspruch 4, **dadurch gekennzeichnet, dass** die Öffnung (210) ein Polygonprofil (211) für den Ansatz eines Werkzeugs, wie Innensechskantschlüssel, Vielzahnschlüssel, Sternschlüssel oder Schraubendreher, aufweist.

6. Ventil nach Anspruch 5, **dadurch gekennzeichnet, dass** als Polygonprofil (211) ein Sechskant vorgesehen ist.

7. Ventil nach wenigstens einem der vorhergehenden Ansprüche, **dadurch gekennzeichnet, dass** in dem Griffkörper (20) eine Bohrung (202) für die Schraube (3) ausgebildet ist, deren Durchmesser gleich groß oder größer als der Durchmesser des Polygonprofils (211) ist.

8. Ventil nach wenigstens einem der vorhergehenden Ansprüche, **dadurch gekennzeichnet, dass** der Körper (22) zwischen dem Griffkörper (20) und der Ventilspindel (10) angeordnet ist und aus wärmeisolierendem Werkstoff besteht.

9. Ventil nach Anspruch 8, **dadurch gekennzeichnet, dass** der Körper (22) eine Öffnung (220) für die Durchführung der Schraube (3) aufweist.

10. Ventil nach wenigstens einem der vorhergehenden Ansprüche, **dadurch gekennzeichnet, dass** der Körper (22) eine Innenriefenverzahnung (221) für eine drehfeste Verbindung mit der Ventilspindel (10) sowie eine Außenriefenverzahnung (222) zur drehfesten Verbindung mit dem Griffkörper (20) oder einem weiteren Zwischenkörper hat.

11. Ventil nach wenigstens einem der vorhergehenden Ansprüche, **dadurch gekennzeichnet, dass** die Schraube (3) mit einem Senkkopf (31) im Griffkörper (20) angeordnet ist.
